# EUROPEAN PATENT APPLICATION

(11) **EP 3 699 597 A1**
(43) Date of publication of application: **26.08.2020**
(21) Application number: 19158821.9
(22) Date of filing: 22.02.2019
(51) Int. Cl.: G01N 35/00, G01N 35/10, B01L 3/02

(54) **A METHOD AND A SYSTEM FOR AUTOMATED HANDLING OF PIPETTES**

(71) Applicant: Techvolver ApS, 2800 Kgs. Lyngby (DK)
(72) Inventor: SKJÆRLUND, Jakob Fjordgård, 2200 Copenhagen N (DK); CARLSEN, Christian, 1653 Copenhagen V (DK)
(74) Representative: AWA Denmark A/S

(57) **Abstract**

The invention relates to a method and a system for automated handling of a pipette. The system comprises an identifying device for identifying the pipette, a robot being configured to perform a handling operation on said pipette, and a control unit. The control unit being configured to obtain data related to the pipette from a database, and where the control unit is further configured to obtain data from one or more of the identifying device and the robot.

## Description

### FIELD

The present invention relates to automated handling of pipettes, more specifically to a method of automated handling of a pipette and to a system for automated handling of a pipette.

### BACKGROUND

Pipettes that are used in laboratories such as in the pharmaceutical industry or in research are subject to repetitive use, wear, misuse, and shocks during their lifetime, that can degrade their accuracy characteristics. It is therefore important to ensure that pipettes are in conformity with the manufacturers' specifications and with regulation standards when they are operated. For example, ensure that the accuracy of aspired and dispensed liquid is within a specified error margin or uncertainty. The certification of conformity tests and calibrations of pipettes are therefore a very important aspect in the lifetime of a pipette, and most pipettes are subject to a maintenance plan comprising a calibration and verification regime. Another very important issue, apart from the accuracy characteristics, is the strong interest in understanding the development and the influencing parameters related to the development of these characteristics, as well as the ability to evaluate and act on the knowledge and influence if the parameters when handling pipettes.

Tests and calibrations for example have to be done on a regular basis and pipettes are thereby routinely taken out of production and sent out from the labs when they have to be calibrated and certified. This can for example be after a certain frequency of use, a certain number of operators having used the pipette, a certain liquid being dispensed, or after a pipette has been damaged or dropped on the ground, causing pipette users and owners to question pipette performance. When these tests and calibrations are performed, several parameters are tested and certain testing conditions have to be observed while performing them. The tests and calibrations are usually carried out by an authorized body such as a test house or a calibration institute, or by a trained operator in a lab.

One of the challenges of this, is that the pipettes being sent out to be certified or calibrated suffer of a fairly long down-time. The owner/labs may therefore need to have many sets of pipettes or in some cases to lack a number of pipettes during the period they are away. When the pipettes are taken in and out of a lab they often have to be processed, such as being sterilized or autoclaved, which is a further complicated and cumbersome step. The longer the intervals between verification or calibration, the larger the risk of test having been performed with an imprecise or faulty pipette, thereby rendering a large number of performed tests and experiments useless.

Also, it is a challenge that the handling of pipettes, which itself influences their performance, varies throughout their journey and throughout their lifetime. Pipette handling, especially the calibration and testing of pipettes, is mostly performed manually by a human operator. The human operator performing the handling is working in an uncomfortable position and many parts of the body are subject to load due to the many repetitive movements and the static work in the handling operations. This is a long and repetitive process which in turn also involves many sources of error. Each human operator handling a pipette will introduce different sources of errors because every operator has a different way of handling a pipette. This also makes it very difficult to keep track on variations in handling of pipettes and also on the accuracy of the tracking.

Another challenge when handling pipettes is to keep track on the performances of the pipettes and to document the performance of pipettes. Some management systems to keep track of pipette portfolios already exist. An example of a management system for pipettes is disclosed in WO2017/173380A1.

### SUMMARY OF THE INVENTION

On this background, an object of the present invention is to minimize or eliminate sources of errors when handling pipettes. Another object of the invention is to improve uniformity of the handling of pipettes. A further object is to reduce the down time of pipettes for the owner, by providing a more effective and flexible handling of pipettes. Thereby another object is to minimize the human operation in relation to handling of pipettes. Another object is to realize this in a manner which is more automatic and thereby reduces the load on the body of human operators performing handling of pipettes manually. Also, an object is to minimize uncertainties related to human handling. A further object is to be able to characterize a pipette, its performance in relation to the handling or operation and in relation to automated handling and operation as well as documenting these relations. It may thereby be possible to achieve more accurate tracking and documentation of the handling of pipettes and the detection of the sources of errors or development of performance related to the handling of pipettes while the handling is performed is also an object of the invention.

According to a first aspect of the present invention, these and further objects may be achieved by a method for automated handling of a pipette, where the method comprises the steps of:
A. Identifying a pipette with an identifying device
B. Obtaining data related to the identified pipette from a database with a control unit
C. Performing a handling operation on the pipette with a robot
   and
D. Obtaining data for the handling operation from one or more of the identifying device and the robot with the control unit

Automated handling should be understood as the handling of a pipette without the substantial presence of manual handling or human implication with regard to the handling of the pipette and the performance characteristics documented. The pipette may be any type of piston-operated volumetric apparatus. This comprises e.g. single-channel piston pipettes, such as positive or direct displacement pipettes, air displacement pipettes, multi-channel piston pipettes, micro-pipettes, or macro-pipettes. The pipette may be a handheld pipette, but may alternatively also be a pipette that is integrated, such as in a liquid handling system e.g. an automated liquid handling system comprising a pipette forming part e.g. of a robot or a robotized arm, or an automatic pipette. The pipette may further be a pipette without a piston such as a propipette.

By having a method for automated handling of a pipette wherein data from the handling operation is obtained, an improved uniformity of handling of pipettes may be achieved. The obtained data also allows to document the performance of the handled pipettes in an active manner, while the handling is performed, and may thereby allow to characterize each pipette that is handled in a more accurate and individual way compared e.g. to the management system disclosed in WO2017/173380A1.

A further advantage is that the handling of pipettes may be performed in a more effective and faster manner. Another object is to reduce the down time of pipettes for the owner, by providing a more effective and flexible handling of pipettes. Another object is to minimize the human operation and handling in relation to handling of pipettes. The handling according to the invention may be performed at all time, since it is automated and does substantially not need a human operator. This may for example be a handling of pipettes at night, while the pipettes are not used e.g. for handheld pipettes used by human workers during working hours in daytime. A set of pipettes may thereby go through different handling operations, such as part of the regular maintenance while the pipettes are vacant, and the downtime of pipettes during working hours may thereby be reduced. Another advantage of realizing this in a manner which is more automatic, is that the load on the body of human operators performing these repetitive manual handling operations is reduced. Two persons performing the same handling operation on the same pipette will not perform it in a uniform way. The resulting handling operation will be different for every different person, every different pipette, and for every different handling operation performed. This may be, logged, processed and/or it may be used in the control of the handling operation, and different and/or differing handling even avoided with a method according to the invention.

With this method the tracking of variations in the handling of pipettes and also the accuracy of the tracking may be done actively rather than re-actively, and may thereby enable the establishment of a pipette network rather than a pipette portfolio. with a pipette network may be understood as a relationship between pipettes, where each pipette can be handled and tracked individually, but also according to its influence on other pipettes, in such a way that it can be documented, that a network of pipettes performs better than the sum of pipettes would, if they were handled and tracked individually.

Controlling a handling operation based on the relational parameters between individual pipettes may with a method according to the invention enable establishment of a pipette network.
Furthermore, there may be no need for a human operator, and if one is needed, the operator does not have to be qualified or certified for handling pipettes. In some embodiments, one of the only tasks of the operator may e.g. be to load a pipette on the robot. However, in other embodiments the robot may be configured to load a pipette automatically. This leaves more time for operators and especially qualified operators to perform other tasks. A further advantage is that more pipettes can be handled at once, compared to a human operator only being able to handle once at a time. This may in turn also be a cheaper and more effective way of handling pipettes.

The identification of the pipette is done by an identifying device. Each pipette has preferably a unique ID that the identifying device can recognize and/or authenticate. Preferably a pipette has an information carrier comprising the ID of the pipette that may preferably not be removable, and it could be printed on or engraved into the pipette. That information carrier may e.g. be a barcode, a serial number, an RFID (radio frequency id) code, a QR code, or any type of chip carrying ID information. The identifying device may be placed on a gripper of the robot or may be separate from the robot, and preferably be configured to identify any type of pipettes and any type of information carrier. In some embodiments the identifying device may alternatively be configured to identify a specific type of pipette or a specific type of information carrier such that it may have a simpler construction or design or such that it may allow the system to be mobile or contained in a controlled or classified environment. The identifying device should preferably have at least one element for identifying a pipette corresponding to the type of information carrier of the pipette. For example, a camera may be able to identify a barcode, a serial number, or a QR code, whereas an RFID reader may be able to identify an RFID tag. An advantage of the identification of the pipette by an identifying device is that it may be performed in a faster and more precise manner than a human operator performing the identification of a pipette. A further advantage is that the identification device also may read and identify an information carrier that a human not would be able to read, such as a QR code, an RFID tag, or an information carrier in a inaccessible location, or access information about the pipette that may be displayed to an operator already at the identification stage.

By identifying a pipette, it is possible to differentiate one pipette from another and it is thereby possible to obtain data related to the identified pipette from the database with the control unit. The control unit may be operatively connected to the different elements according to the invention, e.g. the identifying device, the robot, or any other element according to the invention. The control unit may be wirelessly connected to the different elements. Furthermore, the control unit may be connected to an external network, where the network may e.g. be a network within the building of the owner of the pipette or a global network such as the internet. The control unit may thereby be located next to or remotely from the other elements.

The control unit may be configured to have access to pre-stored and/or preprogrammed software and algorithms to obtain data and perform the handling operation stored on the database or an alternative database. The database may be mirrored, for example in case the network of pipettes is expanded. Alternatively, the control unit may receive an input e.g. from an operator to take over the automated handling e.g. if an error in the automated handling is detected. This may for example be done remotely, from an operator's interface. The control unit may be further configured to send an output e.g. a control signal to the different elements. The obtained data may be data pre-stored on a data storage unit such as the database. Alternatively, the obtained data may be received at the control unit e.g. from the identifying device, the robot, a sensor, or a camera.

The control unit has access to the database to obtain the data related the pipette.

This data may be historical data e.g. as the historical use of the identified pipette, the lab in which the pipette has been used, the activities it has been used for, the users or operators that have used the pipette, or the maintenance history of the pipette e.g. if parts have been changed during the lifetime of the pipette or when the pipette was calibrated or verified. The data may also be information about the pipette, such as the manufacturer, the model, or which set of pipettes the pipette belongs to or it may be data on performance predictions relating to the pipette and/or a network of pipettes. By obtaining data related to the pipette, information such as historical data related to the pipette is accessible before performing the handling operation on the pipette. A human operator handling the pipette would not necessarily have access to such information by identifying the pipette. Even if a human operator could get access to such data, it would be much more cumbersome and would take much more time to obtain that data and he would not be able to process that data as fast. By obtaining data about the pipette at the identification stage, the data that is obtained from the handling operation may be actively compared and matched up with existing historical data from the identified pipette or from any other pipette logged on the database, instead of passively obtaining and comparing data after a handling operation is performed. When only obtaining and comparing data after a handling operation is performed, as it is done today either by a human operator or a management system, it is not possible to take into consideration performance before and while the handling operation is performed, but only after. There is therefore a large amount of information that is lost and never possible to correlate with a specific parameter or performance.

When a pipette has been identified there may be variable amounts of data to obtain related to the pipette for example depending on weather the pipette has been identified before or not. Even if it is the first time a pipette is identified, data related to the pipette may be obtained. This may e.g. be stored data related to that specific type of pipette, historical data from other pipettes of the same manufacturer, data from any other pipette logged on the database, or general specifications related to the pipette such as the size, volume range or user.

The data related to the identified pipette may be data from prior handling operations performed on that same pipette, but may also be data from the same type of pipette, from a pipette being used in the same lab or department, or from a pipette being used by the same operator, a robot, a specific set of parameters, predictions, handling operations etc.

The handling operation performed on a pipette may e.g. be one or more of the following operations:
moving the pipette from a position to another position, replacing the disposable tip of the pipette, depressing a plunger of a pipette, releasing a plunger, fill the pipette with test liquid by depressing and releasing the plunger so that the pipette aspires liquid, empty the pipette of test liquid by depressing and releasing the plunger so that the pipette dispenses liquid, immersing the tip in the test liquid, waiting a time interval, accelerating in a given way, vibration, withdrawing the tip from the test liquid, touching or wiping the tip on a wall of a container with test liquid, remove the tip from the wall of the container, weighing the aspired or dispensed liquid, The handling operation may comprise one, more, some, most, essentially all, and/or all of the above handling operations. The same handling operation may be repeated several times either after one another, or with other handling operations in between. An example of a handling operation repeated several times after one another may for example be wetting the pipette tip several times by immersing the tip.

The first time the pipette is filled may be for wetting the tip of the pipette.

The handling operation on the pipette may also denote an operation performed in relation to a pipette, e.g. the identifying of the pipette, adjustments to it, its environment, measurement of its characteristics such as weight or temperature, documenting these characteristics or shipping of it may also be a handling operation.

The handling operation may comprise a single operation, or may comprise several operations e.g. forming a set of operations or a set of handling operations. The set of operations may be a required set, sequence or series of operations e.g. corresponding to a calibration test, a conformity test, a verification test or pipetting operations. The handling operation may also be comprised of a set of customized handling operations. The handling operations may e.g. be separated by varying time intervals.

In some embodiments, the handling operation of step C may be performed before step A, i.e. step C being performed before step A. This may be e.g. if a pipette is grabbed or mounted and moved towards an identifying device for being identified or if handling requirements describe a situation where this is advantageous. The handling operation may thereby comprise operations that are performed before, while, and after the verification step. Step C may thereby be performed before step A and repeated after step B. The identifying of the pipette may thereby be part of the handling operation. One, more, some, most essentially all, and/or all of the handling operations may also be performed by other elements than the robot according to the invention. A handling operation or a set of handling operations should not be limited to being performed by the robot only, and may in some embodiments be performed by a combination of the robot and other elements, e.g. in order to meet handling needs or specific performance or test requirements.

The steps of the method may be repeated e.g. to handle, calibrate or verify a pipette several times, to handle, calibrate, or verify a set of pipettes, or if the handling, verification, or calibration of the pipette was not performed properly at first. The steps of the method are preferably consecutive, but may alternatively also be in another order.

The data obtained for the handling operation may be any information related e.g. to any of the above operations. The data may be understood as data from the handling operation, but may alternatively also be understood as data related to the handling operation itself or data related to the output of the handling operation. This may for example be the registration of the time a handling operation took, the tracking of the movement of the pipette, the load applied to the plunger of the pipette, or the weighing of the aspired or dispensed liquid. The data from the handling operation may be obtained at any time, this may e.g. be before the handling operation, while the handling operation is performed, or after the handling operation. The obtaining of data may also be denoted as being obtained live or in-situ.

By obtaining data from the handling operation it may be possible to adapt, adjust, and monitor the handling operation, e.g. the verification or calibration of a pipette. This adapting, adjusting, and monitoring of the handling of a pipette may e.g. be done actively while the handling is performed, or after the handling. A further advantage of this, is that the handling of the pipette may be done in a more consistent and uniform way compared to the known handling methods, such as used in manual calibration, verification or pipetting. Also, it is an advantage that the handling of a pipette can be adjusted during the handling and the adjustment logged and the effects documented, so for example a complex handling operation is less vulnerable to external changes for example e.g. temperature changes, unexpected air flows, failing equipment/consumables or the process is interrupted. The obtained data may thereby give a feedback of the handling operation at all time. By having both historical data obtained before performing the handling operation and live data obtained while the handling operation is performed, it may possible to characterize and document the performance of the pipette at all time. This allows for live documentation and live tracking of the performance of the pipette. Furthermore, the handling may be improved actively and it may be done in a more accurate way.

The control unit may obtain the data from the handling operation from any element. This may e.g. by any part of the robot, the identifying device, or any other separate element such as a sensor or a detector.

The handling operation may be performed by a robot. The robot may be adapted to perform any handling operation, such as the examples of handling operations stated above, and may be able to handle any type of pipette. The robot may e.g. be adapted to moving the pipette from a position to another position, replacing the disposable tip of the pipette, depressing a plunger of a pipette, releasing a plunger, fill the pipette with test liquid by depressing and releasing the plunger so that the pipette aspires liquid, empty the pipette of test liquid by depressing and releasing the plunger so that the pipette dispenses liquid, immersing the tip in the test liquid, waiting a time interval, withdrawing the tip from the test liquid, touching or wiping the tip on a wall of a container with test liquid, weighing the aspired or dispensed liquid, or remove the tip from the wall of the container. The robot may be composed of one or more elements. The identifying device may be comprised in the robot or may alternatively be a physically separate element from the robot. The robot may e.g. comprise one or more pipette handling interfaces such as arms, motors, pistons, grippers, wheels, actuators, or sensors. By identifying the pipette to be handled, information related to the pipette is gathered, and the control unit may thereby be able to send instructions to the robot e.g. to adapt the type or size of gripper to the size of the identified pipette, thereby allowing to handle any type or size of pipette. The robot may comprise one or more grippers adapted to different ranges of sizes or types of pipettes. The robot may have one or more grippers already pre-mounted, or may alternatively have the possibility to have exchangeable grippers in case only one gripper can be mounted at a time. The gripper of the robot may e.g. be a gripper with fingers, flexible fingers, a ball gripper e.g. such as a grain-filled flexible ball, or a custom manufactured gripper such as a 3d-printed gripper e.g. adapted to a specific type of pipettes. The robot may thereby be adapted such that the pipette is easy to remove and to mount on the gripper. In some embodiments, the identification device may be comprised or embedded in the gripper. The gripper may e.g. also be denoted as a holder or hand. The robot may comprise a temperature varying element e.g. placed in connection with the gripper or adjacent environment or elements, such that the temperature that the pipette is exposed to while being held by the gripper may be varied. The temperature varying element may warm up or cool down the pipette depending on the application. For example, the gripper may have a heating element that can heat up the pipette while holding it, in order to simulate the hand warmth of a human holding the pipette simulating the influence of this human handling the pipette. The temperature varying element may e.g. be a thermoelectric element such as a Peltier element, that can either heat up or cool down the pipette. It may e.g. be wished to stabilize the temperature of the pipette after it has been used by a human operator. By having a temperature varying element, it may be possible to simulate temperature variations e.g. due to the manual human handling of pipettes in the time interval of the human handling and thereby to isolate an individual parameter variation of a handling operation, in this case the temperature. The gripper for the pipette may be arranged such that the pipette in the mounted condition is supported in such a way that the pipette substantially only can move in one direction, and in a handling condition substantially cannot move in any directions and is thereby locked in a position. This may be done by clicking the pipette onto the gripper, e.g. by attaching a hinged og rotatable upper part of the gripper around the pipette or by using a locking mechanism to fix the pipette in the gripper. The locking mechanism can for example work electronically, with magnetism or gravity, whereby the pipette may be in a mounted state on the gripper. The mounting may be done manually by an operator, but may also be done automatically by the robot.

The gripper may be arranged such that the pipette in the mounted condition is supported in such a way that one axis of movement is substantially fixed and the pipette can move in substantially all but one direction, and if needed under a handling operation substantially cannot move in any directions and is thereby locked in a position. The pipette may thereby be mounted in a "loose" state to the gripper and when needed a "fixed" way. This may e.g. be done by supporting the pipette in the mounted state on the gripper at three points or areas of the pipette, where a first and a second supporting point or area may be achieved using guiding rails of the upper part of the gripper that guides the pipette into position, and a third supporting point or area may be achieved by a curved portion of a fixed lower part of the gripper into which the pipette is pressed by the activation mechanism, the curved portion following substantially the shape of the pipette. The third supporting point or area e.g. providing support at a point or area being closer to the tip of the pipette compared to the first and second supporting points or areas, thereby achieving a stabile support of the pipette.

The locked state of the pipette may be achieved by having the upper part of the gripper arranged such that the hinged or rotatable attachment allows for the upper part to cover the pipette and push it into position. The gripper may comprise an activation mechanism e.g. for actuating the plunger of the pipette, which may e.g. be a mechanical plunger or an electronical plunger mechanism such as a button. The activating mechanism may be comprised in the upper part of the gripper or may be provided as a separate part. In the locked state the activation mechanism should preferably be in position to activate e.g. the plunger of the pipette. Alternatively, the activation mechanism may also be in a position to activate e.g. the plunger of the pipette in the "loose" mounting state of the pipette. The locked state of the pipette may also be achieved when the activation mechanism activates the pipette and thereby push it into position. This may allow for stable positioning in a handling condition for different pipettes of same or different models. By keeping the pipette in a stable handling position the position of the pipette may be kept constant and therefore also known at all times relevant. The precision of the handling may thereby be improved.

The gripper may e.g. be designed to support the pipette in a similar manner as a human hand. Many pipettes are ergonomic and are designed to fit in a human hand, such that they can be held still while being handled. The gripper may therefore support the pipette e.g. at the pipette's ergonomic shoulder. The robot may thereby take advantage of the ergonomic design of the pipettes, e.g. when applying pressure on the plunger and supporting the pipettes at specific points e.g. as its shoulder, whereby the pipette may be kept in a locked position.

The activation mechanism on the gripper may be designed in such a way that force, velocity and repetition accuracy of the activation is similar to that of a human or a group if humans or not at all. This can be achieved by allowing the gripper to flex when activating the pipette. For example, the flexing may be achieved by a hinge on the gripper, by providing the gripper with materials of different elasticity such as steel, aluminium, plastics or rubber that may be able to bend or budge, or it may be achieved by using non-mechanical activation mechanism components such as magnetically driven components.

The gripper may preferably be provided without any sharp edges. This may e.g. be by using plastic components, organically shaped design features and by removing sharp edges of components in the assembly process. Also, the gripper may preferably be designed using lightweight materials and components such as aluminium or plastics which may not be massive. This may e.g. ensure safety and minimize the risk of damaging the environment such as an operator, which is a primary concern relating to the handling of pipettes.

The gripper may have an identification such as a unique non-removable serial number for ID'ing the gripper which may allow for compliance to statutory and industry specific requirements relating to safety, e.g. as risk assessments or machinery directive, traceability e.g. asset management. This may be achieved by engraving the identification or by integrating it into a gripper component. The ID may e.g. be physical or electronic.

The gripper may be configured in such a way that no cables, such as external cables are apparent e.g. along the robot exterior or in an operator working space. This may improve operator safety and minimize cleaning requirements which may be a statutory requirement or a requirement for obtaining operational clearance in controlled or classified environments. In some embodiments only one cable may be apparent and exiting the robot and/or the gripper. This may be achieved by wiring the robot and gripper through the interior of the robot and gripper, or it may be achieved by using components that are wireless or not reliant on electrical power to function.

The gripper surface may be configured to allow for easy and effective cleaning which may be a requirement to operate in controlled or classified environments. This may be achieved by a coating of substantially all or parts of the gripper surfaces e.g. with a lacquer that may contain disinfection properties or may comprising surface reacting properties such that an indication such as a colour shift or other indication at varying pH levels when the surface is exposed.

The gripper may be configured so that it is not possible for the activation mechanism to injure an operator or other humans interacting with gripper. This may be achieved using components that cannot reach the forces necessary, by shielding components or moving parts with covers that can be physical or electronic, or by limiting the performance of components so that they operate at forces that cannot harm. It may also be achieved by establishing a security system as part of the gripper or control unit which may be a security key or barrier necessary to operate the system.

The gripper may be configured so that it can be exchanged with another gripper in a fast manner. This may be less than 5 min, less than 3 min, less than 2 min, less than 1 min, or less than 30 seconds. This may be achieved by using a click-system, thread-less connections or components that operate wirelessly.

The gripper may be configured so that pipette can be exchanged with another pipette in less than 5 seconds. This may be achieved using thread-less connections or pipette mounting systems that function with gravity or magnetism.

The gripper may be configured so that pipette is held in an angle of between 0 and 90°, preferably between 5 and 50°, more preferably between 10 and 30°, more preferably between 15 and 25°, and most preferably at 20°. The gripper may pivot to minimum 0 degrees to simulate human operation and meet manufacturer recommendations for operating pipette. This can be achieved using a robot with at least 4 axes.

The gripper may be configured to enable pivoting around the end of pipette tip when performing a handling operation on a pipette e.g. to follow the requirement of calibration standard ISO8655 regarding the handling operation where pipette tip may have to touch containers to avoid unintentional liquid transfers while optimizing the repetition accuracy of the pipette handling operation. This may e.g. be achieved using a robot with a not fixed reference point for special coordinates such as for example a programmable TCP-point where the gripper is mounted.

The gripper may be configured to allow easy access into confined spaces such as laboratory equipment or scales or weights supporting the pipette. This may allow for a more optimal way of handling a pipette than a human could comfortably or physically do in order to reach the same type of confined space, while also keeping an accurate handling. This can be achieved employing a mounting position for the pipette that is for example 90 degrees different from the position a human may use, a human will often have to hold a pipette, such that the front of the pipette faces a direction that is perpendicular the direction that the human faces, whereas the pipettes front may face forward when mounted in the gripper in such a way.

The gripper may be configured so that pipette is not dropped in event of a power outage e.g. not to damage any equipment, surroundings, or injure an operator. This may be achieved by mounting pipettes in a way such that mounting is not reliant on electrical power and/or prevent robot from moving the gripper into a position where pipette can detach from mounting.

The robot may comprise a local control unit operatively connected to the control unit, whereby the robot may be controlled by the control unit, by sending instructions to the local control unit. The control unit may thereby be located away from the robot. The robot may also comprise a local storage unit or database, e.g. such that data from a handling operation performed by the robot may be stored even if the connection between the control unit and the robot is interrupted. The data stored on the local storage unit or database may then be obtained by the control unit when the connection is re-established. The term robot may be understood as a device for performing a task or an operation in an autonomous way. The robot may be configured to perform at least one handling operation. The robot may be configured to move in one dimension, two dimensions, or three dimensions, and e.g. be a single axis robot, a two axis robot, a three axis robot, a four axis robot, a five axis robot, or a six axis robot. The robot may also comprise several sub robots of the same or of different kind. The robot should therefore not be limited to a single robotised element, but may comprise one or more robotised elements and also one or more non-robotised elements.

In some embodiments, the control unit is configured to process the data obtained in step B and/or D, such that said obtained data is compared with existing data on the database.

In some embodiments, the method further comprises the step of:
E. Logging the data obtained in step B and/or D to the database.

By logging the obtained data, it may be possible to have a history of handling of a pipette, e.g. logged on a database. This further allows to build up a database with both the historical data of the handled pipettes and the data obtained while performing a handling operation. This logged data may then be compared and matched up to new obtained and logged data. This may be done before, while, and/or after a handling operation is performed, allowing for the comparison, characterization and documentation on pipette handling and performance of pipettes based on different parameters. This may e.g. be the comparison, characterization, and documentation of handling operations at different times in the lifetime of the same pipette, or the comparison, characterization, and documentation of the handling operations of two or more different pipettes, where the pipettes e.g. may be of the same or different manufacturer or maintenance history, the same or different use, such as different labs, for different liquids, or by different departments, teams or users. Also, specific handlers, teams of handlers, handling methods, or handling operations may be characterized, and the effects on the pipettes performance may be defined, reported, and dealt with. The owner of the pipettes may establish condition based maintenance on his pipettes, and he may thereby transform his pipette management to comprising a network of pipettes, rather than a pipette portfolio, thereby providing a better overview and a broader assessment of the handling and performance of his pipettes.

These comparisons may allow e.g. to determine or link which one or more parameters may be the reason or the source of error e.g. for a deviation in precision of a pipette or any other deviation from the normal performance of a pipette. The reason may e.g. be the use of a specific liquid degrading pipettes more than others, pipettes from a specific manufacturer that are more or less resistant e.g. be used more times before service or maintenance, sizes of pipettes, or that a specific department, team, or user are wearing pipettes faster than others.
Alternatively, the logging may be denoted as recording of the obtained data.

A further advantage is that it may be possible to determine how a pipette should be handled before, while, and after a handling operation is performed on the pipette. This may allow to determine e.g. how often a pipette should be calibrated or verified e.g. depending on one or more of the above parameters, to predict the handling and the response to the handling, and adapt the handling of the pipette based on the obtained data. The logged data may further be used to assess the quality of prior or future experiments performed by any given pipette.

In some embodiments, the method further comprises the step of:
F. Controlling the handling operation with the control unit by sending instructions to the robot based on the data obtained in step B, step D, and/or the logged data in step E

The control unit may e.g. send instructions to the robot to redo a handling operation, e.g. because the obtained data wasn't matching the historical data on the database or because of an abnormal variation compared to an approved range of a parameter or a performance that are known in relation to a specific handling operation or a specific pipette. It may thereby be possible to assess if a given handling operation is performed properly, either based on the obtained historical data related to the pipette or based on the logged live data, e.g. that the pipette does not need further calibration or verification, or that the pipette is defective or broken. The control unit may thereby send instructions to the robot in order e.g. to stop the handling operation, change a parameter in one or more handling operations and in some situations to stop the handling operation. The database may comprise historical data related to a previously stored similar situation, where a similar abnormal variation of a parameter or performance of a handling operation has been logged. The control unit may thereby be configured to adjust the handling operation e.g. based on the comparing of the obtained data with the stored historical data on the database.

The controlling is preferably done in an automated way, but may also be done by an operator e.g. if a remote control is performed by a user.
In some embodiments, an output from the controlling of the handling operation is predicted by the control unit based on the obtained and/or logged data.

By having a database with documented performance of pipettes, and at the same time live obtained data from the handling operation, it may e.g. be possible to predict the control of the handling operation, the outcome from the handling operation, or the next handling operation. It may also be possible to predict the influence of a given handling operation on other handling operations in a pipette network and so the given handling operation may lead to performance improvements on another handling operation in the network. This prediction data may be stored on the database e.g. as virtually generated data for the pipettes. Virtual data should be understood as data that is generated for a pipette, but not necessarily data from a handling operation that has happened in reality. The output may be simulated virtually based on existing data and/or virtually generated data, stored on the database. This virtual data may then be combined with historical data to make estimations and predictions of the adjustment of the controlling of the handling operation and its outcome.

Another example may be to perform a specific handling operation known to challenge a specific type of pipette, or that the current pipette is close to service and/or maintenance by use or time, and thereby perform a specific handling operation and/or control the handling operation in a specific manner to find out e.g. if the pipette is out of conformity or is deviating from known or predicted performances in a faster manner. An adjustment of the handling may e.g. be a compensation of a deviation of performance of a pipette. This adjustment may be made based on the prediction made e.g. based on virtual data, on historical data, on live data, or based on the combination of the before mentioned. Also, a prediction may be possible for a pipette that is identified and/or handled for the first time.

In some embodiments, the control unit controls the handling operation based on said prediction.
In some embodiments, the handling operation comprises a calibration or verification of the pipette.

By the wording calibration of a pipette, it may be understood that the pipette is subject to a routine calibration or test, such as a test of conformity. This may e.g. be a conformity test according to the gravimetric test method in the ISO 8655-6, a test method specified by a manufacturer, an owners own routine of conformity test or calibration, or a customized calibration or test method. The method should however not be limited to a specific calibration or conformity test, and may also be a verification of pipette. A verification should generally not be subject to strict requirements in the way a certified test or calibration method is. A verification may be performed as an additional check on top of a calibration or test routine. A verification may e.g. involve less or different steps to be performed, for example to make a verification faster or more cost efficient than a calibration or conformity test.

By having a method for automated handling of a pipette wherein the handling operation comprises a calibration or verification of the pipette, an improved uniformity of calibration and testing of pipettes may be achieved.

A further advantage is that the calibration or verification may be performed in a more effective and faster manner. Another object is to reduce the down time of pipettes for the owner, by providing a more effective and flexible calibration and verification of pipettes. Another object is to minimize the human operation in relation to calibration and verification of pipettes. Another object is to realize this in a manner which is more automatic and thereby reduces the load on the body of human operators performing calibrations and tests manually, that can be monotonous, unpleasant, and repetitive.
In general, a calibration test, a conformity test, or a verification of a pipette comprises to make sure that the accuracy of aspired and dispensed volume of liquid by the pipette is within a specified error margin or uncertainty and to document it. This may be a test volume, a nominal volume of a pipette, the consistency or accuracy of a pipette. The calibration and verification of the pipette may constitute one, more, some, most, essentially all, and/or all of the handling operation.

In some embodiments, the handling operation comprises repetitive pipetting of the pipette.

Some examples of steps of repetitive pipetting of the pipette include: filling the pipette with liquid by depressing and releasing the plunger so that the pipette aspires liquid, empty the pipette of test liquid by depressing and releasing the plunger so that the pipette dispenses liquid, wiping the tip on a wall of a container to dispense any possible remaining test liquid from the tip. This is preferably done in accordance with explicit procedures and is preferably traceable and documentable.

In some embodiments, the handling operation comprises the characterization of an aspired and/or a dispensed liquid.

The characterizing of the aspired and/or dispensed liquid may e.g. be the weighing of the dispensed liquid. The weighing may be achieved by any weighing method. Preferred weighing methods may include gravimetric weighing or photometric weighing. The liquid may further be characterized by measuring the liquids viscosity, conductive properties, its molecular properties via nano crystals and subsequent spectral analysis or by any other measuring instrument directed at characterizing the liquid e.g. by interacting electronically or physically with external measuring arrangements such as spectrophotometry measurements.

In some embodiments, the handling operation comprises a plurality of parameters, where at least one of the plurality of parameters of the handling operation is varied. By varying at least one of the plurality of parameters of the handling operation, it may be possible to isolate one or more parameters of a handling operation while keeping all other parameters constant. By isolating one or more parameters it may be possible to test one or more parameters individually without the influence of other parameters varying during the handling operation. As previously discussed, the robot may e.g. comprise a temperature varying element, whereby a parameter that may be varied is the temperature that the pipette is exposed to. Other parameters that may be varied include for example: the speed of displacement of the robot, the movement pattern of the robot, vibration patterns when handling the pipette, the force and/or speed of the pressure applied on the pipettes plunger. It may thereby be possible to simulate an average human operator on some individual parameters by varying said parameters, according to imported data related to a plurality of human operators. It may also be a possibility to simulate a specific human operator, a group of operators, or to handle the pipette according to predictions related to accuracy of performance. This may allow to estimate the impact of individual parameters on the performance of a given pipette, so that a given person or given pipette is interchangeable in a given pipette portfolio, thus establishing a pipette network.

According to a second aspect, the invention relates to a system for automated handling of a pipette. The system comprises an identifying device for identifying the pipette, a robot being configured to perform a handling operation on said pipette, and a control unit; wherein the control unit is configured to obtain data related to the pipette from a database, and where the control unit is further configured to obtain data from one or more of the identifying device and the robot.

In some embodiments, the control unit is further configured to process the obtained data and to compare said obtained data with existing data on the database.

In some embodiments, the control unit is configured to log the obtained data to the database.

In some embodiments, the control unit is configured to control the handling operation based on the obtained and/or logged data, by sending instructions to the robot.

In some embodiments, an output from the controlling of the handling operation is predicted by the control unit based on the logged data.

In some embodiments, the control unit adjusts the handling operation based on said prediction.

In some embodiments, the handling operation comprises a plurality of parameters, where at least one of the plurality of parameters, where the control unit is configured to vary at least one of the plurality of parameters of the handling operation.

In some embodiments, the system comprises a sensor for measuring an environmental parameter and said control unit is configured to obtain environmental data from said sensor, and wherein the instructions sent to the robot are based on said obtained environmental data.

The system may thereby be able to adjust the handling of the pipette, to predict the outcome of a handling operation or the output of the controlling of the handling operation, and to document the performance of the pipettes, based on the obtained environmental data. The environmental data may be the temperature, the atmospheric pressure, the humidity, the air flow, gas concentrations such as the CO₂ (carbon dioxide) concentration, etc.

In some embodiments, at least the identifying device and the robot are placed in a controlled environment.

The controlled environment may preferably be substantially tight to air, light, vibration such that the environment may be isolated and totally sealed from the surroundings of said environment. The controlled environment may e.g. comprise a cleanroom facility, a closed container, box, or chamber. The controlled environment may also be able to fit the whole system. This may e.g. allow the system to be mobile, transportable and movable as one unit without having to disassemble the system components, and without the need to have a room where the system is placed, where the environment can be adjusted. This also gives the possibility to remotely control or monitor the system.

According to a third aspect, the invention relates to a computer readable medium comprising computer readable code, wherein the computer readable medium is configured to implement the method according to a first aspect of the invention.

## Claims

1. A method for automated handling of a pipette, said method comprising the steps of:
A. Identifying a pipette with an identifying device
B. Obtaining data related to the identified pipette from a database with a control unit
C. Performing a handling operation on the pipette with a robot
and
D. Obtaining data for the handling operation from one or more of the identifying device and the robot with the control unit

2. The method according to claim 1, where the control unit is configured to process the data obtained in step B and/or D, such that said obtained data is compared with existing data on the database.

3. The method according to any one of claims 1 or 2, further comprising the step of:
E. Logging the data obtained in step B and/or D to the database

4. The method according to claim 3, further comprising the step of:
F. Controlling the handling operation with the control unit by sending instructions to the robot based on the data obtained in step B, step D, and/or the logged data in step E

5. The method according to claim 4, wherein an output from the controlling of the handling operation is predicted by the control unit based on the obtained and/or logged data.

6. The method according to claim 5, wherein the control unit controls the handling operation based on said prediction.

7. The method according to any one of the preceding claims, wherein the handling operation comprises a calibration or verification of the pipette.

8. The method according to any one of the preceding claims, wherein the handling operation comprises repetitive pipetting of the pipette.

9. The method according to any one of the preceding claims, wherein the handling operation comprises the characterization of an aspired and/or a dispensed liquid.

10. The method according to any one of the preceding claims, wherein the handling operation comprises a plurality of parameters, where at least one of the plurality of parameters of the handling operation is varied.

11. A system for automated handling of a pipette, said system comprising:
an identifying device for identifying the pipette, a robot being configured to perform a handling operation on said pipette, and a control unit;
where the control unit is configured to obtain data related to the pipette from a database, and where the control unit is further configured to obtain data from one or more of the identifying device and the robot.

12. The system according to claim 11, wherein the control unit is further configured to process the obtained data and to compare said obtained data with existing data on the database.

13. The system according to claim 11 or 12, wherein the control unit is configured to log the obtained data to the database.

14. The system according to any one of claims 11 to 13, wherein the control unit is configured to control the handling operation based on the obtained and/or logged data, by sending instructions to the robot.

15. The system according to claim 14, wherein an output from the controlling of the handling operation is predicted by the control unit based on the logged data.

16. The system according to claim 15, wherein the control unit controls the handling operation based on said prediction.

17. The system according to any of claims 11 to 16, wherein the handling operation comprises a plurality of parameters, where the control unit is configured to vary at least one of the plurality of parameters of the handling operation.

18. The system according to any one of claims 14 to 17, wherein the system comprises a sensor for measuring an environmental parameter and said control unit is configured to obtain environmental data from said sensor, and wherein the instructions sent to the robot are based on said obtained environmental data.

19. The system according to any of claims 11 to 18, wherein at least the identifying device and the robot are placed in a controlled environment.

20. A computer readable medium comprising computer readable code, wherein the computer readable medium is configured to implement the method according to any of claim 1 to 10.
